# EUROPEAN PATENT APPLICATION

(11) **EP 4 557 825 A1**
(43) Date of publication of application: **21.05.2025**
(21) Application number: 22950609.2
(22) Date of filing: 14.07.2022
(51) Int. Cl.: H04W 28/18, H04W 72/04

(54) **COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); HE, Chuanfeng, Dongguan, Guangdong 523860 (CN)
(74) Representative: RGTH
(86) International application number: PCT/CN2022/105629
(87) International publication number: WO 2024/011483

(57) **Abstract**

A communication method, a terminal device, and a network device are provided. The method includes: A terminal device receives first signalling sent by a network device, where the first signalling is used to dynamically schedule first uplink data, and the first signalling is used to indicate a transmission waveform of the first uplink data. In embodiments of this application, the network device may send, to the terminal device, the first signalling used to dynamically schedule the first uplink data, to indicate a transmission beam of the first uplink data. In other words, the network device may dynamically indicate the transmission beam of the first uplink data to the terminal device. In comparison with a conventional semi-static manner of configuring a transmission waveform of first uplink data, the flexibility of configuring the transmission waveform is improved.

## Description

### TECHNICAL FIELD

This application relates to the field of communications technologies, and more specifically, to a communication method, a terminal device, and a network device.

### BACKGROUND

A transmission waveform used for uplink data is configured based on a physical uplink shared channel (physical uplink shared channel, PUSCH) configuration (PUSCH-Config). However, the PUSCH configuration is configured in a semi-static manner. Consequently, this semi-static configuration manner results in that a transmission beam of the uplink data can only be a transmission beam from the PUSCH configuration during a semi-static configuration period, and other transmission waveforms cannot be used. If the transmission waveform needs to be adjusted, the transmission waveform can only be adjusted based on a new PUSCH configuration during the next semi-static configuration period. This semi-static manner of configuring the transmission waveform is not flexible enough, and cannot meet a transmission requirement of a terminal device.

### SUMMARY

This application provides a communication method, a terminal device, and a network device. The following describes the aspects to which this application is related.

According to a first aspect, a communication method is provided, including: receiving, by a terminal device, first signalling sent by a network device, where the first signalling is used to dynamically schedule first uplink data, and the first signalling is used to indicate a transmission waveform of the first uplink data.

According to a second aspect, a communication method is provided, including: sending, by a network device, first signalling to a terminal device, where the first signalling is used to dynamically schedule first uplink data, and the first signalling is used to indicate a transmission waveform of the first uplink data.

According to a third aspect, a terminal device is provided, including a receiving unit, configured to receive first signalling sent by a network device, where the first signalling is used to dynamically schedule first uplink data, and the first signalling is used to indicate a transmission waveform of the first uplink data.

According to a fourth aspect, a network device is provided, including a sending unit, configured to send first signalling to a terminal device, where the first signalling is used to dynamically schedule first uplink data, and the first signalling is used to indicate a transmission waveform of the first uplink data.

According to a fifth aspect, a terminal device is provided, including a transceiver, a memory, and a processor, where the memory is configured to store a program, and the processor is configured to invoke the program in the memory, and control the transceiver to send first uplink data, to cause the terminal device to perform some or all of the steps in the method according to the first aspect.

According to a sixth aspect, a network device is provided, including a transceiver, a memory, and a processor, where the memory is configured to store a program, and the processor is configured to invoke the program in the memory, and control the transceiver to receive first uplink data, to cause the network device to perform some or all of the steps in the method according to the second aspect.

According to a seventh aspect, an embodiment of this application provides a communications system, and the system includes the foregoing terminal and/or the foregoing network device. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program, and the computer program causes a communications device (for example, a terminal device or a network device) to perform some or all of the steps in the methods according to the foregoing aspects.

According to a ninth aspect, an embodiment of this application provides a computer program product. The computer program product includes a non-transitory computer-readable storage medium that stores a computer program. The computer program is operable to cause a communications device (for example, a terminal device or a network device) to perform some or all of the steps in the methods according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the methods according to the foregoing aspects.

In embodiments of this application, the network device may send, to the terminal device, the first signalling used to dynamically schedule the first uplink data, to indicate a transmission beam of the first uplink data. In other words, the network device may dynamically indicate the transmission beam of the first uplink data to the terminal device. In comparison with a conventional semi-static manner of configuring a transmission waveform of first uplink data, the flexibility of configuring the transmission waveform is improved.

### BRIEF DESCRIPTION OF DRAWINGS

FIG. 1 shows a wireless communications system 100 to which an embodiment of this application is applied.
FIG. 2 is a schematic diagram of uplink data transmission based on data channel aggregation.
FIG. 3 is a flowchart of a communication method according to an embodiment of this application.
FIG. 4 shows a correspondence between transmission waveforms and different statuses of a transform precoder according to an embodiment of this application.
FIG. 5 is a schematic diagram of indicating a transmission waveform by using DCI according to an embodiment of this application.
FIG. 6 is a schematic diagram of a terminal device according to an embodiment of this application.
FIG. 7 is a schematic diagram of a network device according to an embodiment of this application.
FIG. 8 is a schematic diagram of a communications apparatus according to an embodiment of this application.

### DESCRIPTION OF EMBODIMENTS

The technical solutions in this application are described below with reference to the accompanying drawings.

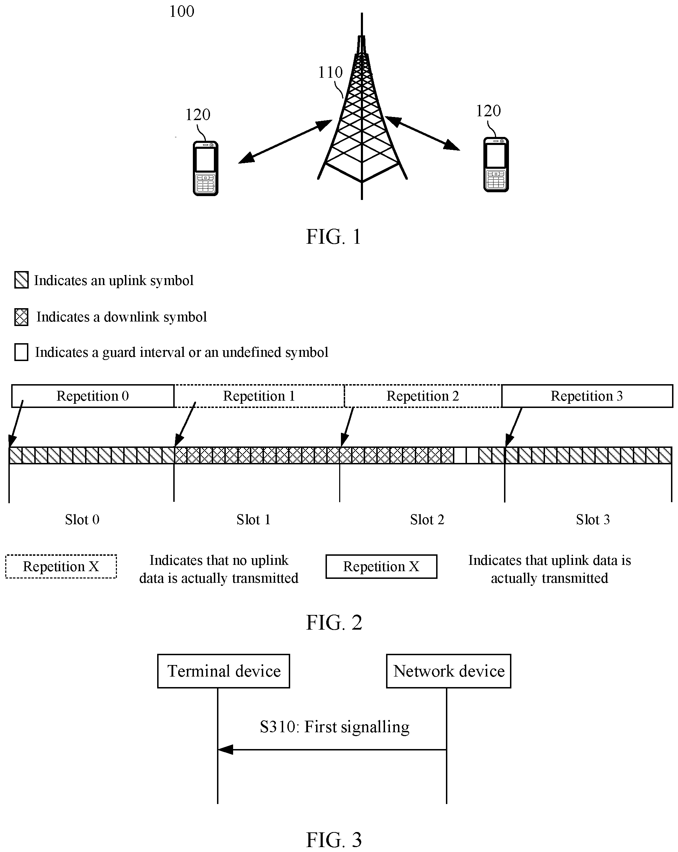

FIG. 1 shows a wireless communications system 100 to which an embodiment of this application is applied. The wireless communications system 100 may include a network device 110 and terminal devices 120. The network device 110 may be a device that communicates with the terminal device 120. The network device 110 may provide communication coverage for a specific geographic area, and may communicate with the terminal device 120 located within the coverage.

FIG. 1 illustratively shows one network device and two terminals. Optionally, the wireless communications system 100 may include a plurality of network devices, and another quantity of terminal devices may be included in a coverage range of each network device. This is not limited in embodiments of this application.

Optionally, the wireless communications system 100 may further include another network entity such as a network controller or a mobility management entity. This is not limited in embodiments of this application.

It should be understood that the technical solutions of embodiments of this application may be applied to various communications systems, such as a 5th generation (5th generation, 5G) system or new radio (new radio, NR), a long-term evolution (long-term evolution, LTE) system, an LTE frequency division duplex (frequency division duplex, FDD) system, and LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be used to function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without relaying a communication signal by using a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or be replaced with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of a same access technology or different access technologies. A specific technology and a specific device form used by the network device are not limited in embodiments of this application.

The base station may be stationary or mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device that communicates with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may also be implemented by software functions running on hardware, or by virtualization functions instantiated on a platform (for example, a cloud platform).

### Scheduling manner of uplink data

In a communications system, a network device may schedule to-be-transmitted uplink data of a terminal device using downlink control information (downlink control information, DCI). Currently, in the communications system, the DCI supports a plurality of formats, for example, a format 0_0, a format 0_1, and a format 0_2.

The following uses the DCI in the format 0_0 as an example to describe an indication field in the DCI. The DCI in the format 0_0 may be used for scheduling a PUSCH in a cell.

Generally, the indication field within the DCI in the format 0_0 may include an identifier for DCI formats (identifier for DCI formats), frequency domain resource allocation (frequency domain resource assignment), time domain resource allocation (time domain resource assignment), a frequency hopping flag (frequency hopping flag), a modulation and coding scheme (modulation and coding scheme, MCS), a new data indicator (new data indicator, NDI), a redundancy version (redundancy version), a hybrid automatic repeat request (hybrid automatic repeat request, HARQ) process number, a transmit power command (transmit power command, TPC) used for scheduling the PUSCH, and an uplink (uplink, UL)/supplementary uplink (supplementary uplink, SUL) identifier.

A parameter in the frequency domain resource allocation indication field is used to indicate a frequency domain resource for transmitting the PUSCH, and may include a quantity of resource blocks (resource block, RB) in an uplink bandwidth part (bandwidth part, BWP) occupied by the PUSCH. Generally, the frequency domain resource allocation indication field includes 4 bits.

A parameter in the time domain resource allocation indication field is used to indicate a time domain resource for transmitting the PUSCH. Generally, the parameter is indication information (for example, an index of a time domain resource allocation item) about the time domain resource allocation item in a time domain resource allocation list. The time domain resource allocation list is configured based on a PUSCH configuration. For a specific configuration manner, refer to the description of the PUSCH configuration below.

A parameter in the MCS indication field is used to indicate an MCS applied to the PUSCH.

A parameter in the NDI indication field is used to indicate that the PUSCH is initial transmission data or retransmission data. Generally, when a value of the NDI is 1, it indicates that the PUSCH is the initial transmission data; and when a value of the NDI is 0, it indicates that the PUSCH is the retransmission data.

A parameter in the TPC indication field used for scheduling the PUSCH is used to indicate that an uplink transmit power of the PUSCH is increased or decreased.

A parameter in the HARQ process number indication field is used to indicate a HARQ process of the PUSCH.

In other scenarios (for example, in a random access procedure), when uplink data is a message 3 PUSCH (Msg3 PUSCH), the Msg3 PUSCH may be scheduled by a random access response (random access response, RAR) uplink grant. Generally, the RAR uplink grant may include a time domain resource allocation indication field, and a parameter in the time domain resource allocation indication field is used to indicate indication information (for example, an index of a time domain resource allocation item) about a default time domain resource allocation item in a default time domain resource allocation list (or a default time domain resource allocation list). Currently, the default time domain resource allocation list may include 16 default time domain resource allocation items.

It should be noted that a function of the default time domain resource allocation list is similar to that of the time domain resource allocation list in the PUSCH configuration, and a function of the default time domain resource allocation item is similar to that of the time domain resource allocation item in the PUSCH configuration. For details, refer to the description below. For brevity, details are not described herein again.

For ease of understanding of this application, based on the communications system described in FIG. 1, the following first describes a solution of improving uplink coverage with reference to data channel aggregation and data frequency modulation.

### Data channel aggregation mechanism

Currently, to improve uplink coverage, a data channel aggregation solution is introduced in an NR. In the data channel aggregation mechanism, a plurality of slots (slot) may be aggregated by using uplink and downlink aggregation factors (aggregation factor), and PUSCH data is transmitted on the plurality of aggregated slots. The manner of transmitting the data on the plurality of aggregated slots may improve uplink coverage of a single transmission.

In some implementations, before transmission based on data channel aggregation is performed, a repetition quantity of repeated transmission of uplink data needs to be indicated. In some implementations, the repetition quantity may be carried in a PUSCH configuration (PUSCH-Config) and indicated with an aggregation factor, and be configured for a terminal device in a semi-static manner.

A data structure of the PUSCH-Config is shown as follows. For details, refer to the data structure below. The PUSCH-Config may include one or more of the following: a resource allocation type (represented by "resourceAllocation"), a PUSCH time domain resource allocation list (represented by "pusch-TimeDomainAllocationList"), a PUSCH aggregation factor (represented by "pusch-AggregationFactor"), a modulation and coding scheme (modulation and coding scheme, MCS) (represented by "mcs-Table"), or the like.

The resource allocation type may include a type 0 (represented by "resourceAllocationType0"), a type 1 (represented by "esourceAllocationType1"), and dynamic switching (represented by "dynamicSwitch").

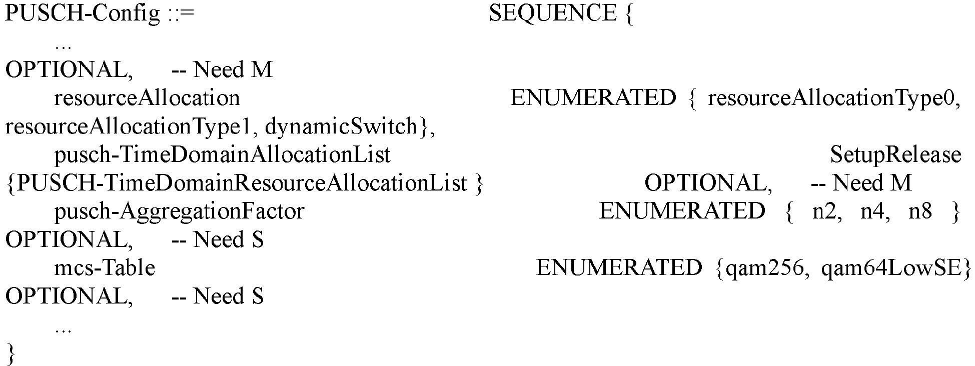

In some other implementations, when transmission based on multi-slot aggregation is combined with flexible slots, in addition to the repetition quantity needing to be indicated, which symbols or slots can be used for a repetition of transmission of the uplink data needs to be determined according to a specific method. Currently, it may be specified that a repetition of transmission of a PUSCH may cover consecutive slots. When the available symbol in a slot does not meet a requirement, the repetition of transmission corresponding to the slot may be ignored. For ease of understanding, the following describes the repetition of transmission of the PUSCH with reference to FIG. 2.

FIG. 2 is a schematic diagram of uplink data transmission based on data channel aggregation. It is assumed that the data channel aggregation is performed in slots 1 to 4 to transmit a PUSCH 1. All symbols in the slot 0 and the slot 3 are uplink symbols. All symbols in the slot 1 are downlink symbols. The last two symbols in the slot 2 are uplink symbols, and the two symbols before the uplink symbols are used as guard intervals or undefined symbols, and the remaining symbols in the slot 2 are downlink symbols.

Therefore, with reference to FIG. 2, if the data channel aggregation is performed in the slots 1 to 4 to transmit the PUSCH 1, only all the symbols in the slot 0 and the slot 3 and the last two uplink symbols in the slot 2 may be used for the aggregation to transmit the PUSCH. In other words, the 0^{th} repetition (repetition 0) of transmission of the PUSCH 1 may be performed in the slot 0. The 3^{rd} repetition (repetition 3) of transmission of the PUSCH 1 may be performed on the uplink symbols in the slot 2 and the slot 3. Because the 1^{st} repetition (repetition 1) of transmission of and the 2^{nd} repetition (repetition 2) of transmission of the PUSCH 1 correspond to the downlink symbols in the slot 1 and the slot 2, the repetition of transmission of the PUSCH 1 cannot be performed.

### Data frequency hopping transmission mechanism

To improve uplink coverage, the data frequency hopping transmission mechanism is introduced in the communications system, or a diversity gain may be obtained through frequency hopping transmission. For uplink channel transmission, because a transmission bandwidth of an uplink channel is relatively small and a frequency diversity gain is often insufficient, an extra frequency diversity gain may be obtained by using a frequency hopping (frequency hopping) technology. Currently, the frequency hopping (frequency hopping) technology is widely applied in an OFDM system (for example, an LTE system) to transmit uplink data. Currently, in a 5G NR standard, the frequency hopping technology is also supported in an uplink signal transmission process. However, a BWP is also introduced into the 5G NR. Therefore, for a terminal device, a frequency domain resource involved with the frequency hopping generally needs to be within an uplink BWP activated by the terminal device.

Based on the introduction above, it may be learned that both the data channel aggregation mechanism and the data frequency hopping transmission mechanism may consume excessive wireless resources. Therefore, in the known communications system, it is considered that uplink coverage may be improved by adjusting a transmission waveform. For ease of understanding, the following describes a transmission waveform of uplink data and a process of configuring the transmission waveform of the uplink data.

### Transmission waveform of the uplink data

Because diversified service requirements need to be supported in the NR, new waveforms need to be introduced to match transmission requirements for diversified service. When different services perform transmission based on different parameter sets (such as subcarrier spacing, a symbol length, and a CP length) on an air interface, these different services need to coexist well and do not interfere with each other. Therefore, a design objective of the new waveform may include one or more of the following: having higher frequency efficiency, a good capability of resisting inter-carrier frequency offset and time synchronization deviation, lower out-of-band radiation interference, an excellent peak-to-average power ratio (peak to average power ratio, PAPR) indicator, meeting requirements of asynchronous transmission and non-orthogonal transmission between users, or the like.

Based on a requirement that the NR needs to support a plurality of new services, the design objective of the new waveform on the air interface is to flexibly select and configure suitable waveform parameters based on a service scenario and a service type. For example, a system bandwidth is divided into several subbands to carry different service types, and different waveform parameters are selected. There is only a very low guard band among the subbands, or no guard band is required at all. Each subband may perform filtering processing by using a digital filter, to eliminate related interference among the subbands, implement waveform decoupling of different subbands, and meet requirements of flexible coexistence among different services.

Currently, a discussion result for standards is as follows: Waveforms mainly used in an NR uplink process include a DFT-s-OFDM waveform and a CP-OFDM waveform. The DFT-s-OFDM waveform may be complementary to the CP-OFDM waveform to some extent. For example, as compared with the CP-OFDM waveform, a peak-to-average power ratio of the DFT-s-OFDM waveform may be as low as 3 dB, so that the DFT-s-OFDM waveform has better uplink coverage.

### Configuration manner of the transmission waveform

Currently, a transmission waveform of uplink data (for example, a PUSCH) is configured in a semi-static manner. In some scenarios, a transmission waveform of the PUSCH is configured based on a PUSCH configuration (PUSCH-Config). Reference may be made to the description below for a data structure of an information element (information element) of the PUSCH configuration. It should be noted that, for brevity, the following only describes parameters related to an understanding of the solutions of this application.

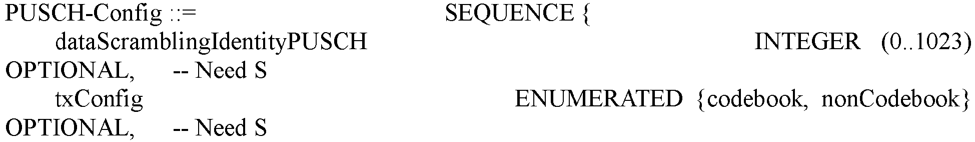

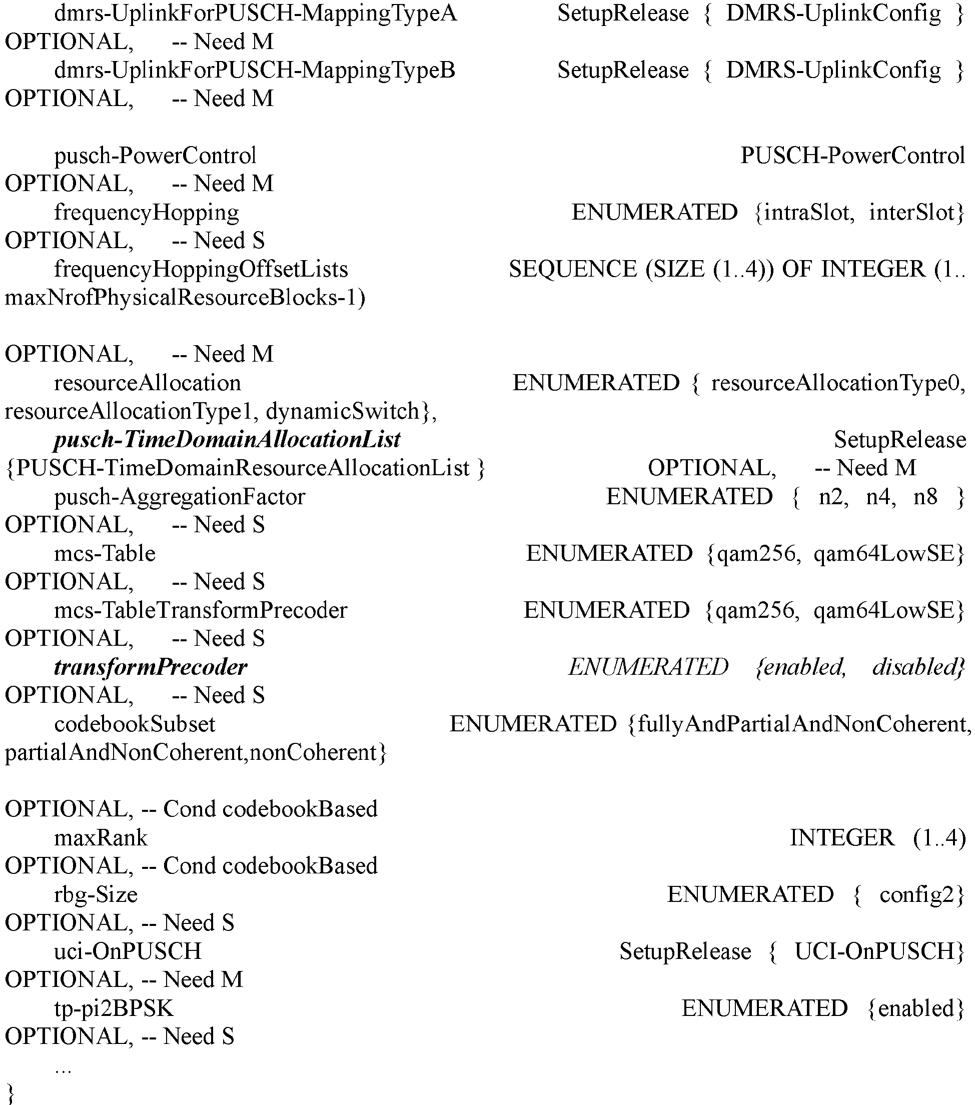

It may be learned from the data structure above that the PUSCH configuration includes a PUSCH time domain resource allocation list (represented by ***"pusch-TimeDomainAllocationList*")** and a transform precoding parameter (represented by ***"transformPrecoder*")*.***

The PUSCH time domain resource allocation list may include one or more PUSCH time domain resource allocation items, and one PUSCH time domain resource allocation item may be used to indicate a time domain resource for transmitting the PUSCH. Currently, an existing PUSCH time domain resource allocation list may include 16 PUSCH time domain resource allocation items. A data structure of the PUSCH time domain resource allocation list may be as follows:

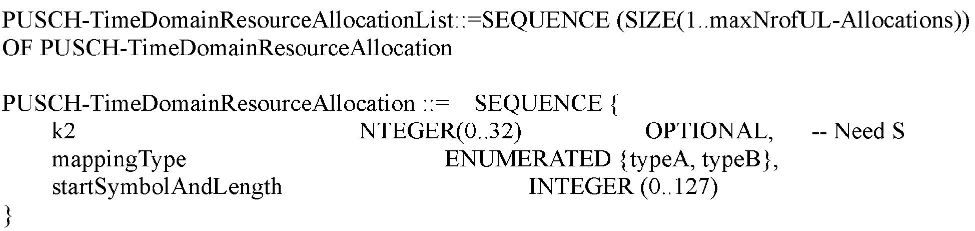

With reference to the data structure above, the PUSCH time domain resource allocation list may include PUSCH time domain resource allocation items (represented by "PUSCH-TimeDomainResourceAllocation"). A PUSCH time domain resource allocation item may include a parameter "k2", a mapping type (represented by "mappingType"), and a start symbol and length (represented by "startSymbolAndLength"). The parameter "k2" is used to determine a relative location between the PUSCH and a physical downlink control channel (physical downlink control channel, PDCCH) in time domain. The mapping type is used to indicate a resource mapping manner of the PUSCH in the time domain. The start symbol and length is used to indicate a start time domain location of the PUSCH in the time domain and a length of an occupied time domain resource.

The transform precoding parameter is used to indicate an enabled (enabled) transform precoder or a disabled (disabled) transform precoder. Different statuses of the transform precoder may correspond to one transmission beam.

It may be learned from the description above that a transmission waveform used for uplink data is configured based on the PUSCH configuration (PUSCH-Config). However, the PUSCH configuration is configured in a semi-static manner. Consequently, in this semi-static configuration manner, a transmission beam of the uplink data can only be a transmission beam from the PUSCH configuration in a semi-static configuration period, and other transmission waveforms cannot be used. If the transmission waveform needs to be adjusted, the transmission waveform can only be adjusted in a next semi-static configuration period based on a new PUSCH configuration. This semi-static manner of configuring the transmission waveform is not flexible enough, and cannot meet a transmission requirement of a terminal device.

For example, when the terminal device camps at an edge of a cell, a channel condition of a channel changes rapidly, and the terminal device may need to adjust a transmission waveform of uplink data based on the change in the channel condition. Generally, when the channel condition deteriorates, the transmission waveform of the uplink data needs to be switched from a CP-OFDM waveform to a DFT-s-OFDM waveform, which helps improve uplink coverage of the terminal device. However, currently, based on the semi-static manner of configuring the transmission waveform, when the channel condition deteriorates, a new semi-static configuration period may not come yet. In this case, the transmission waveform of the uplink data cannot be adjusted, which causes a terminal device. Therefore, the semi-static manner of configuring the transmission waveform cannot meet a transmission requirement of the terminal device.

Therefore, to avoid the problem above, an embodiment of this application provides a communication method. In the embodiment of this application, a network device may dynamically indicate a transmission beam of uplink data to a terminal device. The following describes a communication method according to the embodiment of this application with reference to FIG. 3. The method shown in FIG. 3 includes step S310.

In step S310, the network device sends first signalling to the terminal device.

The first signalling is used to dynamically schedule first uplink data, and the first signalling is used to indicate a transmission waveform of the first uplink data.

The first uplink data may be, for example, a PUSCH. In different PUSCH transmission scenarios, the first signalling may be different signalling in an existing communications system. For example, in a transmission scenario for the PUSCH, the first signalling may be DCI. A format of the DCI may be one or more of a format 0_0, a format 0_1, or a format 0_2. For another example, in a transmission scenario for a message 3 PUSCH, the first signalling may be a RAR uplink grant. Certainly, the first signalling may alternatively be another signalling with a similar function. This is not specifically limited in embodiments of this application.

In some embodiments, the transmission waveform of the first uplink data may include a discrete Fourier transform-spread OFDM (discrete fourier transform-spread OFDM, DFT-s-OFDM) waveform, and/or a cyclic prefix-orthogonal frequency division multiplexing (cyclic prefix-orthogonal frequency division multiplexing, CP-OFDM) waveform. The CP-OFDM waveform has some advantages, such as a good effect of resisting inter-symbol interference and frequency selective fading, a simple frequency domain equalization receiver, readiness to combine with MIMO technology, and support for flexible resource allocation. However, the CP-OFDM waveform also has disadvantages, such as a relatively large signal peak-to-average ratio, specific spectrum efficiency overheads due to presence of a CP, sensitivity to time synchronization and frequency offset, relatively large out-of-band radiation, and performance degradation due to inter-carrier interference. To some extent, the DFT-s-OFDM waveform may be complementary to the CP-OFDM waveform. For example, as compared with the CP-OFDM waveform, a peak-to-average power ratio of the DFT-s-OFDM waveform may be as low as 3 dB, so that the DFT-s-OFDM waveform has better uplink coverage. Therefore, in embodiments of this application, the transmission waveform that may be used in an uplink transmission process may include the DFT-s-OFDM waveform and the CP-OFDM waveform.

It should be understood that, in embodiments of this application, the transmission waveform of the first uplink data may further include various optimized or new waveform solutions based on the CP-OFDM waveform, such as a zero-tail spread DFT-OFDM (zero-tail spread DFT-OFDM, ZT-s-OFDM) waveform, a unique word DFT-s-OFDM (unique word DFT-s-OFDM, UW DFT-s-OFDM) waveform, a guard interval DFT-s-OFDM (guard interval DFT-s-OFDM, GI DFT-s-OFDM) waveform, an orthogonal time frequency space (orthogonal time frequency space, OTFS) waveform, a filtered-orthogonal frequency division multiplexing (filtered-orthogonal frequency division multiplexing, F-OFDM) waveform, a universal filtered-orthogonal frequency division multiplexing (universal filtered-orthogonal frequency division multiplexing, F-OFDM) waveform, and a flexible cyclic prefix-orthogonal frequency division multiplexing (flexible cyclic prefix-orthogonal frequency division multiplexing, CP-OFDM) waveform. Certainly, the transmission waveform of the first uplink data may further include a new waveform in a future communications system. This is not limited in embodiments of this application.

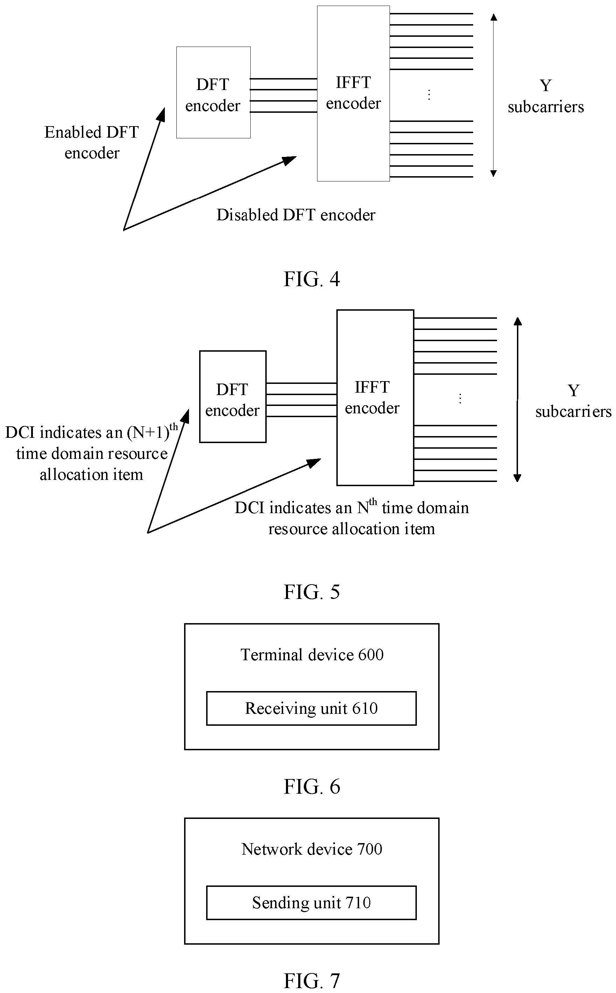

In some implementations, the first signalling may indicate a transmission beam of the first uplink data by indicating a transform precoding parameter (for example, an enabled (enabled) transform precoder, or a disabled (disabled) transform precoder). The following describes, with reference to FIG. 4, a solution that the transform precoding parameter indicates the transmission waveform.

FIG. 4 shows a correspondence between transmission waveforms and different statuses of a transform precoder according to an embodiment of this application. With reference to FIG. 4, if the transform precoding parameter is a disabled (disabled) transform precoder, the transform precoder (for example, a DFT encoder) does not work, and an uplink signal may be processed in an inverse fast Fourier transform (inverse fast fourier transform, IFFT) encoder. In this case, a transmission waveform of the uplink signal is a CP-OFDM waveform. On the contrary, if the transform precoding parameter is an enabled (enabled) transform precoder, the transform precoder (for example, a DFT encoder) works, and the uplink signal may be first processed in the DFT encoder and then sent to the IFFT encoder for processing. In this case, the transmission waveform of the uplink signal is a DFT-s-OFDM waveform.

Therefore, in an embodiment of this application, when the transform precoding parameter is an enabled DFT precoder, the transmission beam of the first uplink data may include the DFT-s-OFDM waveform. In some other implementations, when the transform precoding parameter is a disalbed DFT precoder, the transmission beam of the first uplink data includes the CP-OFDM waveform.

Certainly, in an embodiment of this application, another parameter other than the transform precoding parameter may alternatively be used as a parameter indicating the transmission waveform of the first uplink data to indicate the transmission waveform. For example, an identifier of the transmission waveform may be used. This is not limited in embodiments of this application.

As described above, the first signalling may indicate the transmission waveform of the first uplink data. The indication may be understood as a direct indication or an indirect indication. If the first signalling directly indicates the transmission waveform of the first uplink data, it may be understood that the first signalling directly carries a parameter used to indicate the transmission waveform of the first uplink data. For example, the first signalling includes a dedicated indication field for the transform precoding parameter. In addition, in embodiments of this application, with respect to the direct indication manner, direct indication may be alternatively implemented in another manner, in addition to the foregoing manner that the parameter that is used to indicate the transmission waveform may be directly carried in the first signalling. The following describes in detail the direct indication manner with reference to Implementation 1. For brevity, details are not described herein again.

If the first signalling indirectly indicates the transmission waveform of the first uplink data, it may be understood that, an indication field (also referred to as a "first indication field") indicating another parameter (also referred to as a "first parameter") is reused in the first signalling to indirectly indicate the transmission waveform of the first uplink data. That is, the first signalling includes the first indication field, the first indication field is used to indicate the first parameter, and the first parameter corresponds to the transmission waveform of the first uplink data. For ease of understanding, the following describes in detail the indirect indication manner in Implementation 1 and Implementation 2 to Implementation 7. For brevity, details are not described herein again.

In an embodiment of this application, if the transmission waveform of the first uplink data is indicated based on a parameter (for example, a transform precoding parameter) used to indicate the transmission waveform of the first uplink data, the first parameter in the first signalling may correspond to the parameter indicating the transmission waveform of the first uplink data. In other words, the first parameter may indicate the transmission waveform of the first uplink data by using the corresponding parameter that indicates the transmission waveform. For example, if a transform precoding parameter corresponding to the first parameter is the disabled transform precoder, the transmission waveform of the first uplink data corresponding to the first parameter is a CP-OFDM waveform. For another example, if a transform precoding parameter corresponding to the first parameter is the enabled transform precoder, the transmission waveform of the first uplink data corresponding to the first parameter is a DFT-s-OFDM waveform.

It should be noted that, in an embodiment of this application, different values of the first parameter in the first indication field may correspond to one or more transmission waveforms. In addition, the transmission waveforms corresponding to the different values of the first parameter may be the same or different. This is not limited in embodiments of this application. For ease of understanding, the following describes, with reference to Implementation 1 to implementation 7, manners of reusing different parameters in the first signalling to indicate the transmission waveform.

### Implementation 1

Generally, the first signalling may include a parameter used to determine a time domain resource of the first uplink data. In an embodiment of this application, the parameter indicating the time domain resource may correspond to a transmission waveform. Alternatively, the first parameter is used to determine the time domain resource of the first uplink data, and the time domain resource of the first uplink data corresponds to the transmission waveform of the first uplink data.

In some implementations, that the time domain resource of the first uplink data corresponds to the transmission waveform of the first uplink data may be understood as follows: A parameter (for example, a transform precoding parameter) used to indicate the transmission waveform of the first uplink data is added to a time domain resource allocation item indicating the time domain resource of the first uplink data.

The following uses DCI as the first signalling as an example to describe the solutions in embodiments of this application. Based on the foregoing description of the DCI, it may be learned that the DCI may include a time domain resource allocation indication field. In the embodiments of this application, a parameter in the time domain resource allocation indication field may be used as the first parameter to indicate the transmission waveform of the first uplink data. The following uses an indirect indication manner and a direct indication manner as examples to separately describe indication manners in embodiments of this application.

In the direct indication manner, a parameter indicating the transmission waveform may be added to the time domain resource allocation item in advance. In this way, after a PUSCH configuration is sent to a terminal device, the parameter that is included in a resource allocation item and that indicates the transmission waveform is also sent to the terminal device. Then, while indicating the time domain resource allocation item using the first parameter, the network device may directly indicate, by using the first parameter, the transmission waveform included in the time domain resource allocation item.

The following uses an example in which the transform precoding parameter is used as the parameter indicating the transmission waveform, so as to describe a data structure of a PUSCH time domain resource allocation list. The time domain resource allocation list may be represented as "PUSCH-TimeDomainResourceAllocationlist", the time domain resource allocation item may be represented as "PUSCH-TimeDomainResourceAllocation", and the transform precoding parameter may be represented as "transformPrecoder-r18". In comparison with the foregoing data structure of the PUSCH time domain resource allocation list, it may be learned that the transform precoding parameter "transformPrecoder-r18" is added to the time domain resource allocation item in the embodiment of this application to indicate the transmission waveform.

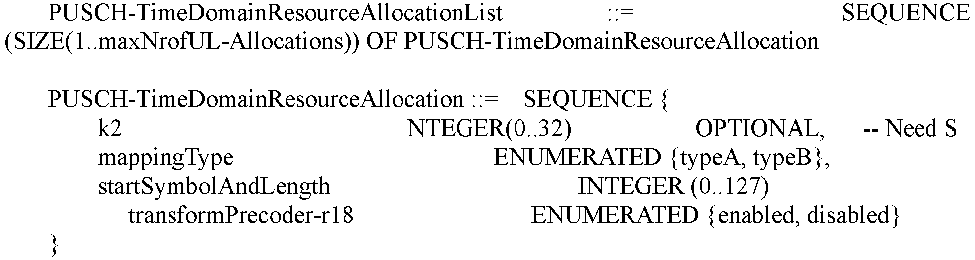

For ease of understanding, the following describes, with reference to FIG. 5 and based on the foregoing described correspondence between the time domain resource allocation item and the transmission waveform, a method of indicating the transmission waveform of the first uplink data.

FIG. 5 is a schematic diagram of indicating a transmission waveform by using DCI according to an embodiment of this application. It is assumed that a transform precoding parameter included in an N^{th} time domain resource configuration item is a disabled transform precoder, and a transform precoding parameter included in an (N+1)^{th} time domain resource configuration item is an enabled transform precoder. With reference to FIG. 5, if the DCI indicates that a time domain resource configuration item for the first uplink data is an N^{th} item, the transmission waveform of the first uplink data is a CP-OFDM waveform. If the DCI indicates that a time domain resource configuration item for the first uplink data is an (N+1)^{th} item, the transmission waveform of the first uplink data is a DFT-s-OFDM waveform.

In some other implementations, that the time domain resource of the first uplink data corresponds to the transmission waveform of the first uplink data may be understood as follows: There is an independent correspondence between the time domain resource of the first uplink data and the transmission waveform of the first uplink data. For example, a mapping table may be used to indicate the correspondence between the time domain resource of the first uplink data and the transmission waveform of the first uplink data.

In the indirect indication manner, a correspondence between a time domain resource allocation item and a transmission waveform may be established in advance. In this way, when the network device indicates a time domain resource allocation item of the first uplink data by using the first parameter, the terminal device may determine, based on the time domain resource allocation item of the first uplink data and the correspondence, the transmission waveform corresponding to the indicated time domain resource allocation item.

For example, a transform precoding parameter is used as the parameter indicating the transmission waveform. The correspondence between the time domain resource allocation item and the transmission waveform may be understood as a correspondence between the time domain resource allocation item and the transform precoding parameter. In this way, when the network device indicates the time domain resource allocation item of the first uplink data by using the first parameter, the terminal device may determine, based on the time domain resource allocation item of the first uplink data and the correspondence, the transform precoding parameter corresponding to the time domain resource allocation item of the first uplink data, and determine the transmission waveform of the first uplink data by using the transform precoding parameter.

It should be noted that, in the indirect indication manner, a data structure of a conventional PUSCH time domain resource allocation list may be used. In other words, a parameter indicating the transmission waveform may not be added in the data structure of the conventional PUSCH time domain resource allocation list, to facilitate the reduction of changes to an existing communications protocol.

In addition, the correspondence between the time domain resource allocation item and the transmission waveform may be configured in a manner of pre-configuration, pre-definition, or the like. This is not limited in embodiments of this application.

The following uses a RAR uplink grant as the first signalling as an example to describe the solutions in embodiments of this application. Generally, the RAR uplink grant may include a parameter indicating a time domain resource of a Msg3 PUSCH. In the embodiments of this application, the parameter may be used as the first parameter to indicate the transmission waveform of the first uplink data. The following uses an indirect indication manner and a direct indication manner as examples to separately describe indication manners in embodiments of this application.

In some implementations, that the time domain resource of the first uplink data corresponds to the transmission waveform of the first uplink data may be understood as follows: A parameter (for example, a transform precoding parameter) used to indicate the transmission waveform of the first uplink data is added to a default time domain resource allocation item indicating the time domain resource of the first uplink data.

In the direct indication manner, a parameter indicating the transmission waveform may be added to the default time domain resource allocation item in advance. In this way, after a PUSCH configuration is sent to a terminal device, the parameter that is included in the default time domain resource allocation item and that indicates the transmission waveform is also sent to the terminal device. Then, when the network device indicates the default time domain resource allocation item by using the first parameter, because the time domain resource allocation item includes the parameter indicating the transmission waveform, the first parameter also directly indicates the parameter that is included in the default time domain resource allocation item and that indicates the transmission waveform.

For example, a transform precoding parameter is used as the parameter indicating the transmission waveform. Currently, a default time domain resource allocation list may generally include 16 default time domain resource allocation items. In this case, the transform precoding parameter may be added to some or all of the default time domain resource allocation items in the default time domain resource allocation list, to establish a correspondence between the default time domain resource allocation item and the transform precoding parameter. Then, while indicating the default time domain resource allocation item using the first parameter, the network device may also directly indicate, by using the first parameter, the transform precoding parameter included in the default time domain resource allocation item.

In some other implementations, that the default time domain resource of the first uplink data corresponds to the transmission waveform of the first uplink data may be understood as follows: There is an independent correspondence between the default time domain resource of the first uplink data and the transmission waveform of the first uplink data. For example, a mapping table may be used to indicate the correspondence between the default time domain resource of the first uplink data and the transmission waveform of the first uplink data.

In the indirect indication manner, a correspondence between the default time domain resource allocation item and the transmission waveform may be established in advance. In this way, when the network device indicates the default time domain resource allocation item of the first uplink data by using the first parameter, the terminal device may determine, based on the default time domain resource allocation item of the first uplink data and the correspondence, the transmission waveform corresponding to the indicated default time domain resource allocation item.

For example, a transform precoding parameter is used as the parameter indicating the transmission waveform. In this case, the correspondence between the default time domain resource allocation item and the transmission waveform may be understood as a correspondence between the default time domain resource allocation item and the transform precoding parameter. In this way, when the network device indicates the default time domain resource allocation item of the first uplink data by using the first parameter, the terminal device may determine, based on the default time domain resource allocation item of the first uplink data and the correspondence, the transform precoding parameter corresponding to the default time domain resource allocation item of the first uplink data, and determine the transmission waveform of the first uplink data by using the transform precoding parameter.

It should be noted that, in the indirect indication manner, a data structure of a conventional default time domain resource allocation item may be used. In other words, a parameter indicating the transmission waveform may not be added into the data structure of the existing default time domain resource allocation item, which facilitates the reduction of changes to an existing communications protocol.

In addition, the correspondence between the default time domain resource allocation item and the transmission waveform may be configured in a manner of pre-configuration, pre-definition, or the like. This is not limited in embodiments of this application.

### Implementation 2

Generally, the first signalling may include a parameter used to indicate a resource allocation type of the first uplink data. In an embodiment of this application, the parameter indicating the resource allocation type may correspond to the transmission waveform. Alternatively, the first parameter is used to indicate a resource allocation type of the first uplink data, and the resource allocation type of the first uplink data corresponds to the transmission waveform of the first uplink data.

In some implementations, that the resource allocation type of the first uplink data corresponds to the transmission waveform of the first uplink data may be understood as follows: There is an independent correspondence between the resource allocation type of the first uplink data and the transmission waveform of the first uplink data. For example, a mapping table may be used to indicate the correspondence between the resource allocation type of the first uplink data and the transmission waveform of the first uplink data.

The following uses DCI as the first signalling as an example to describe the solutions in embodiments of this application. Based on the foregoing description of the DCI, it may be learned that the DCI may include a resource allocation type indication field. In the embodiments of this application, a parameter in the resource allocation type indication field may be used as the first parameter to indicate the transmission waveform of the first uplink data.

A correspondence between the resource allocation type and the transmission waveform may be established in advance. In this way, when the network device indicates the resource allocation type of the first uplink data by using the first parameter, the terminal device may determine, based on the first parameter and the correspondence, the transmission waveform corresponding to the indicated resource allocation type.

For example, a transform precoding parameter is used as the parameter indicating the transmission waveform. In this case, the correspondence between the resource allocation type and the transmission waveform may be understood as a correspondence between the resource allocation type and the transform precoding parameter. In this way, when the network device indicates the resource allocation type of the first uplink data by using the first parameter, the terminal device may determine, based on the resource allocation type of the first uplink data and the correspondence, the transform precoding parameter corresponding to the resource allocation type of the first uplink data, and determine the transmission waveform of the first uplink data based on the transform precoding parameter.

It should be noted that the correspondence between the resource allocation type allocation item and the transmission waveform may be configured in a manner of pre-configuration, pre-definition, or the like. This is not limited in embodiments of this application.

The following uses a DFT-s-OFDM waveform and a CP-OFDM waveform as examples to describe the correspondence between the resource allocation type and the transmission waveform in an embodiment of this application. Uplink data transmitted by using the DFT-s-OFDM waveform generally needs to occupy consecutive frequency domain resources. Therefore, the DFT-s-OFDM waveform may correspond to a resource allocation type that indicates occupying the consecutive frequency domain resources. The resource allocation type that indicates occupying the consecutive frequency domain resources may be, for example, a type 1. Correspondingly, the CP-OFDM waveform may correspond to a type 0. Certainly, in an embodiment of this application, the DFT-s-OFDM waveform may correspond to the type 0, and correspondingly, the CP-OFDM waveform may correspond to the type 1.

In other words, the correspondence between the resource allocation type and the transform precoding parameter may include: The transform precoding parameter corresponding to the type 1 is a disabled transform precoder; and/or the transform precoding parameter corresponding to the type 0 is an enabled transform precoder. Certainly, the correspondence between the resource allocation type and the transform precoding parameter may alternatively include: The transform precoding parameter corresponding to the type 0 is a disabled transform precoder; and/or the transform precoding parameter corresponding to the type 1 is an enabled transform precoder.

### Implementation 3

Generally, the first signalling may include a parameter used to indicate a frequency domain resource of the first uplink data. In an embodiment of this application, the parameter indicating the frequency domain resource may correspond to the transmission waveform. Alternatively, the first parameter is used to indicate a frequency domain resource of the first uplink data, and the frequency domain resource of the first uplink data corresponds to the transmission waveform of the first uplink data.

In some implementations, that the frequency domain resource of the first uplink data corresponds to the transmission waveform of the first uplink data may be understood as follows: There is an independent correspondence between the frequency domain resource of the first uplink data and the transmission waveform of the first uplink data. For example, a mapping table may be used to indicate the correspondence between the frequency domain resource of the first uplink data and the transmission waveform of the first uplink data.

The following uses DCI as the first signalling as an example to describe the solutions in embodiments of this application. Based on the foregoing description of the DCI, it may be learned that the DCI may include a frequency domain resource allocation indication field. In the embodiments of this application, a parameter in the frequency domain resource allocation indication field may be used as the first parameter to indicate the transmission waveform of the first uplink data.

A correspondence between the frequency domain resource and the transmission waveform may be established in advance. In this way, when the network device indicates the frequency domain resource of the first uplink data by using the first parameter, the terminal device may determine, based on the frequency domain resource of the first uplink data and the correspondence, the transmission waveform corresponding to the frequency domain resource of the first uplink data.

In some implementations, the correspondence between the frequency domain resource and the transmission waveform may include a correspondence between a quantity of frequency domain resources and the transmission waveform. The quantity of frequency domain resources may be, for example, a quantity of RBs. Certainly, the correspondence between the frequency domain resource and the transmission waveform may alternatively be a correspondence between a BWP in which the frequency domain resource is located and the transmission waveform. This is not limited in embodiments of this application.

For example, a transform precoding parameter is used as the parameter indicating the transmission waveform. In this case, the correspondence between the quantity of frequency domain resources and the transmission waveform may be understood as a correspondence between the quantity of frequency domain resources and the transform precoding parameter. In this way, when the network device indicates the quantity of frequency domain resources of the first uplink data by using the first parameter, the terminal device may determine, based on the quantity of frequency domain resources of the first uplink data and the correspondence, the transform precoding parameter corresponding to the quantity of frequency domain resources of the first uplink data, and determine the transmission waveform of the first uplink data based on the transform precoding parameter.

It should be noted that the correspondence between the frequency domain resource and the transmission waveform may be configured in a manner of pre-configuration, pre-definition, or the like. This is not limited in embodiments of this application.

The following uses a DFT-s-OFDM waveform and a CP-OFDM waveform as examples to describe the correspondence between the quantity of frequency domain resources and the transmission waveform in embodiments of this application. Generally, when the quantity of frequency domain resources is relatively small, uplink coverage of the terminal device may be limited. In this case, it may be helpful for improving the uplink coverage to send the first uplink data by using the DFT-s-OFDM waveform. In addition, when the quantity of frequency domain resources is relatively large, available resources for transmitting the first uplink data are relatively large, and spectrum efficiency overheads caused by transmission of a CP may be tolerated. Therefore, the correspondence may include: Less frequency domain resources correspond to the DFT-s-OFDM waveform; and/or more frequency domain resources correspond to the CP-OFDM waveform.

In some implementations, whether the quantity of frequency domain resources may be relatively large or small may be determined based on a quantity threshold. For example, when the quantity of frequency domain resources is greater than the quantity threshold, it may be understood that the quantity of frequency domain resources is relatively large, and corresponds to the DFT-s-OFDM waveform. Correspondingly, when the quantity of frequency domain resources is less than the quantity threshold, it may be understood that the quantity of frequency domain resources is relatively small, and corresponds to the CP-OFDM waveform. It should be noted that, in embodiments of this application, whether the quantity of frequency domain resources may be relatively large or small may alternatively be determined in another manner. For example, when the frequency domain resource is set to some specific values, it may be determined that the quantity of frequency domain resources is relatively large. On the contrary, when the frequency domain resource is not set to the specific values, it may be determined that the quantity of frequency domain resources is relatively small. This is not limited in embodiments of this application.

For example, whether the quantity of frequency domain resources is relatively large or small is determined based on the quantity threshold. In this embodiment of this application, the correspondence between the quantity of frequency domain resources and the transform precoding parameter may include: If the quantity of frequency domain resources is less than the quantity threshold, a transform precoding parameter corresponding to the quantity of frequency domain resources is an enabled precoding transformer; and/or if the quantity of frequency domain resources is greater than or equal to the quantity threshold, a transform precoding parameter corresponding to the quantity of frequency domain resources is a disabled precoding transformer.

### Implementation 4

Generally, the first signalling may include a parameter used to indicate a modulation and coding scheme of the first uplink data. In embodiments of this application, the parameter indicating the modulation and coding scheme may correspond to the transmission waveform. Alternatively, the first parameter is used to indicate a modulation and coding scheme of the first uplink data, and the modulation and coding scheme of the first uplink data corresponds to the transmission waveform of the first uplink data.

In some implementations, that the modulation and coding scheme of the first uplink data corresponds to the transmission waveform of the first uplink data may be understood as follows: There is an independent correspondence between the modulation and coding scheme of the first uplink data and the transmission waveform of the first uplink data. For example, a mapping table may be used to indicate the correspondence between the modulation and coding scheme of the first uplink data and the transmission waveform of the first uplink data.

The following uses DCI as the first signalling as an example to describe the solutions in embodiments of this application. Based on the foregoing description of the DCI, it may be learned that the DCI may include a modulation and coding scheme indication field. In the embodiments of this application, a parameter in the modulation and coding scheme indication field may be used as the first parameter to indicate the transmission waveform of the first uplink data.

A correspondence between the modulation and coding scheme and the transmission waveform may be established in advance. In this way, when the network device indicates the modulation and coding scheme of the first uplink data by using the first parameter, the terminal device may determine, based on the modulation and coding scheme of the first uplink data and the correspondence, the transmission waveform corresponding to the indicated modulation and coding scheme.

For example, a transform precoding parameter is used as the parameter indicating the transmission waveform. In this case, the correspondence between a code rate of the modulation and coding scheme and the transmission waveform may be understood as a correspondence between the modulation and coding scheme and the transform precoding parameter. In this way, when the network device indicates the modulation and coding scheme of the first uplink data by using the first parameter, the terminal device may determine, based on the modulation and coding scheme of the first uplink data and the correspondence, the transform precoding parameter corresponding to the modulation and coding scheme of the first uplink data, and determine the transmission waveform of the first uplink data based on the transform precoding parameter.

It should be noted that the correspondence between the modulation and coding scheme and the transmission waveform may be configured in a manner of pre-configuration, pre-definition, or the like. This is not limited in embodiments of this application.

In some implementations, the correspondence between the modulation and coding scheme and the transmission waveform may include a correspondence between a code rate of the modulation and coding scheme and the transmission waveform.

The following uses a DFT-s-OFDM waveform and a CP-OFDM waveform as examples to describe the correspondence between the code rate of the modulation and coding scheme and the transmission waveform in an embodiment of this application. Generally, when the code rate of the modulation and coding scheme is relatively low, uplink coverage of the terminal device may be limited. In this case, it may be helpful for improving the uplink coverage to send the first uplink data by using the DFT-s-OFDM waveform. On the contrary, when the code rate of the modulation and coding scheme is relatively high, the first uplink data may be sent by using the CP-OFDM waveform. Therefore, the correspondence may include: A modulation and coding scheme with a relatively low code rate corresponds to the DFT-s-OFDM waveform; and/or a modulation and coding scheme with a relatively high code rate corresponds to the CP-OFDM waveform.

In some implementations, whether the code rate of the modulation and coding scheme is relatively high or low may be determined based on a code rate threshold. For example, when the code rate of the modulation and coding scheme is greater than the code rate threshold, it may be understood that the code rate of the modulation and coding scheme is relatively high, and corresponds to the CP-OFDM waveform. Correspondingly, when the code rate of the modulation and coding scheme is less than the code rate threshold, it may be understood that the code rate of the modulation and coding scheme is relatively low, and corresponds to the DFT-s-OFDM waveform. It should be noted that, in embodiments of this application, whether the code rate of the modulation and coding scheme is relatively high or low may alternatively be determined in another manner. For example, when the code rate of the modulation and coding scheme is set to some specific values, it may be determined that the code rate of the modulation and coding scheme is relatively high. On the contrary, when the code rate of the modulation and coding scheme is not set to the specific values, it may be determined that the code rate of the modulation and coding scheme is relatively low. This is not limited in embodiments of this application.

For example, whether the code rate of the modulation and coding scheme is relatively high or low is determined based on the code rate threshold. In embodiments of this application, the correspondence between the code rate of the modulation and coding scheme and the transform precoding parameter may include: If the code rate of the modulation and coding scheme is less than the code rate threshold, a transform precoding parameter corresponding to the code rate of the modulation and coding scheme is an enabled precoding transformer; and/or if the code rate of the modulation and coding scheme is greater than or equal to the code rate threshold, a transform precoding parameter corresponding to the code rate of the modulation and coding scheme is a disabled precoding transformer.

In other some implementations, the correspondence between the modulation and coding scheme and the transmission waveform may include a correspondence between an order of the modulation and coding scheme and the transmission waveform.

The following uses a DFT-s-OFDM waveform and a CP-OFDM waveform as examples to describe the correspondence between the order of the modulation and coding scheme and the transmission waveform in an embodiment of this application. Generally, when the order of the modulation and coding scheme is relatively low, uplink coverage of the terminal device may be limited. In this case, it may be helpful for improving the uplink coverage to send the first uplink data by using the DFT-s-OFDM waveform. On the contrary, when the order of the modulation and coding scheme is relatively high, the first uplink data may be sent by using the CP-OFDM waveform. Therefore, the correspondence may include: A modulation and coding scheme with a relatively low order corresponds to the DFT-s-OFDM waveform; and/or a modulation and coding scheme with a relatively high order corresponds to the CP-OFDM waveform.

In some implementations, whether the order of the modulation and coding scheme is relatively high or low may be determined based on an order threshold. For example, when the order of the modulation and coding scheme is greater than the order threshold, it may be understood that the order of the modulation and coding scheme is relatively high, and corresponds to the DFT-s-OFDM waveform. Correspondingly, when the order of the modulation and coding scheme is less than the order threshold, it may be understood that the order of the modulation and coding scheme is relatively low, and corresponds to the CP-OFDM waveform. It should be noted that, in embodiments of this application, whether the order of the modulation and coding scheme is relatively high or low may alternatively be determined in another manner. For example, when the order of the modulation and coding scheme is set to some specific values, it may be determined that the order of the modulation and coding scheme is relatively high. On the contrary, when the order of the modulation and coding scheme is not set to the specific values, it may be determined that the order of the modulation and coding scheme is relatively low. This is not limited in embodiments of this application.

For example, whether the order of the modulation and coding scheme is relatively high or low is determined based on the order threshold. In an embodiment of this application, the correspondence between the order of the modulation and coding scheme and the transform precoding parameter may include: If the order of the modulation and coding scheme is less than the order threshold, a transform precoding parameter corresponding to the order of the modulation and coding scheme is an enabled precoding transformer; and/or if the order of the modulation and coding scheme is greater than or equal to the order threshold, a transform precoding parameter corresponding to the order of the modulation and coding scheme is a disabled precoding transformer.

### Implementation 5

Generally, the first signalling may include a parameter used to indicate a transmit power of the first uplink data. In embodiments of this application, the parameter indicating the transmit power may correspond to the transmission waveform. Alternatively, the first parameter is used to indicate a transmit power of the first uplink data, and the transmit power of the first uplink data corresponds to the transmission waveform of the first uplink data.

In some implementations, that the transmit power of the first uplink data corresponds to the transmission waveform of the first uplink data may be understood as follows: There is an independent correspondence between the transmit power of the first uplink data and the transmission waveform of the first uplink data. For example, a mapping table may be used to indicate the correspondence between the transmit power of the first uplink data and the transmission waveform of the first uplink data.

The following uses DCI as the first signalling as an example to describe the solutions in embodiments of this application. Based on the foregoing description of the DCI, it may be learned that the DCI may include a TPC indication field used to schedule a PUSCH. In the embodiments of this application, a parameter in the TPC indication field may be used as the first parameter to indicate the transmission waveform of the first uplink data.

A correspondence between the transmit power and the transmission waveform may be established in advance. In this way, when the network device indicates the transmit power of the first uplink data by using the first parameter, the terminal device may determine, based on the transmit power of the first uplink data and the correspondence, the transmission waveform corresponding to the transmit power.

For example, a transform precoding parameter is used as the parameter indicating the transmission waveform. In this case, the correspondence between the transmit power and the transmission waveform may be understood as a correspondence between the transmit power and the transform precoding parameter. In this way, when the network device indicates the transmit power of the first uplink data by using the first parameter, the terminal device may determine, based on the transmit power of the first uplink data and the correspondence, the transform precoding parameter corresponding to the transmit power of the first uplink data, and determine the transmission waveform of the first uplink data based on the transform precoding parameter.

It should be noted that, the correspondence between the transmit power and the transmission waveform may be configured in a manner of pre-configuration, pre-definition, or the like. This is not limited in embodiments of this application.

The following uses a DFT-s-OFDM waveform and a CP-OFDM waveform as examples to describe the correspondence between the transmit power and the transmission waveform in an embodiment of this application. Generally, the DFT-s-OFDM waveform has a higher transmit power quota than the CP-OFDM waveform. Therefore, when the transmit power of the first uplink data is relatively high, the first uplink data may be sent by using the DFT-s-OFDM waveform. On the contrary, when the transmit power of the first uplink data is relatively low, the first uplink data may be sent by using the CP-OFDM waveform. Therefore, the correspondence may include: A relatively high transmit power corresponds to the DFT-s-OFDM waveform; and/or a relatively low transmit power corresponds to the CP-OFDM waveform.

In some implementations, whether the transmit power is relatively high or low may be determined based on a transmit power threshold. For example, when the transmit power of the first uplink data is greater than or equal to the transmit power threshold, it may be understood that the transmit power of the first uplink data is relatively high, and corresponds to the DFT-s-OFDM waveform. Correspondingly, when the transmit power of the first uplink data is less than the transmit power threshold, it may be understood that the transmit power of the first uplink data is relatively low, and corresponds to the CP-OFDM waveform. It should be noted that, in embodiments of this application, whether the transmit power is relatively high or low may alternatively be determined in another manner. For example, when the transmit power is set to some specific values, it may be determined that the transmit power is relatively high. On the contrary, when the transmit power is not set to the specific values, it may be determined that the transmit power is relatively low. This is not limited in embodiments of this application.

For example, whether the transmit power is relatively high or low is determined based on the transmit power threshold. Then, in an embodiment of this application, the correspondence between the transmit power and the transform precoding parameter may include: If the transmit power is higher than or equal to the transmit power threshold, a transform precoding parameter corresponding to the transmit power is an enabled precoding transformer; and/or if the transmit power is lower than the transmit power threshold, a transform precoding parameter corresponding to the transmit power is a disabled precoding transformer.

### Implementation 6

Generally, the first signalling may include a parameter used to indicate a HARQ process of the first uplink data. In embodiments of this application, the parameter indicating the HARQ process may correspond to the transmission waveform. Alternatively, the first parameter is used to indicate a HARQ process of the first uplink data, and the HARQ process of the first uplink data corresponds to the transmission waveform of the first uplink data.

In some implementations, that the HARQ process of the first uplink data corresponds to the transmission waveform of the first uplink data may be understood as follows: There is an independent correspondence between the HARQ process of the first uplink data and the transmission waveform of the first uplink data. For example, a mapping table may be used to indicate the correspondence between the HARQ process of the first uplink data and the transmission waveform of the first uplink data.

The following uses DCI as the first signalling as an example to describe the solutions in embodiments of this application. Based on the foregoing description of the DCI, it may be learned that the DCI may include a HARQ process number indication field. In the embodiments of this application, a parameter in the HARQ process number indication field may be used as the first parameter to indicate the transmission waveform of the first uplink data.

A correspondence between a HARQ process number and the transmission waveform may be established in advance. In this way, when the network device indicates the HARQ process of the first uplink data by using the first parameter, the terminal device may determine, based on the HARQ process of the first uplink data and the correspondence, the transmission waveform corresponding to the HARQ process number.

For example, a transform precoding parameter is used as the parameter indicating the transmission waveform. In this case, the correspondence between the HARQ process and the transmission waveform may be understood as a correspondence between the HARQ process and the transform precoding parameter. In this way, when the network device indicates the HARQ process of the first uplink data by using the first parameter, the terminal device may determine, based on the HARQ process of the first uplink data and the correspondence, the transform precoding parameter corresponding to the HARQ process of the first uplink data, and determine the transmission waveform of the first uplink data based on the transform precoding parameter.

It should be noted that the correspondence between the HARQ process number and the transmission waveform may be configured in a manner of pre-configuration, pre-definition, or the like. This is not limited in embodiments of this application.

The following uses a DFT-s-OFDM waveform and a CP-OFDM waveform as examples to describe the correspondence between the HARQ process number and the transmission waveform in an embodiment of this application. When the HARQ process number is set to some specific values, the HARQ process number that is the specific value may correspond to the DFT-s-OFDM waveform. On the contrary, when the HARQ process number is not set to the specific values, the HARQ process number that is not the specific value may correspond to the CP-OFDM waveform. This is not limited in embodiments of this application.

In other words, in embodiments of this application, the correspondence between the HARQ process and the transform precoding parameter may include: If the HARQ process number is set to some specific values, a transform precoding parameter corresponding to the HARQ process number is an enabled precoding transformer; and/or if the HARQ process number is not set to the specific values, a transform precoding parameter corresponding to the HARQ process number is a disabled precoding transformer.

### Implementation 7

Generally, the first signalling may include a parameter used to indicate whether the first uplink data is retransmission data or initial transmission data. In embodiments of this application, the parameter used to indicate the retransmission data or the initial transmission data may correspond to the transmission waveform. Alternatively, the first parameter is used to indicate whether the first uplink data is retransmission data or initial transmission data, and whether the first uplink data is the retransmission data or the initial transmission data determines the corresponding transmission waveform of the first uplink data.

In some implementations, whether the first uplink data is the retransmission data or the initial transmission data determining the corresponding transmission waveform of the first uplink data may be understood as follows: There is an independent correspondence between the first uplink data being the retransmission data or the initial transmission data and the transmission waveform of the first uplink data. For example, a mapping table may be used to indicate the transmission waveform corresponding to the first uplink data being the retransmission data, and the transmission waveform corresponding to the first uplink data being the initial transmission data.

The following uses DCI as the first signalling as an example to describe the solutions in embodiments of this application. Based on the foregoing description of the DCI, it may be learned that the DCI may include an NDI indication field. In the embodiments of this application, a parameter in the NDI indication field may be used as the first parameter to indicate the transmission waveform of the first uplink data.

A correspondence between the retransmission data or the initial transmission data and the transmission waveform may be established in advance. In this way, when the network device indicates whether the first uplink data is the retransmission data or the initial transmission data by using the first parameter, the terminal device may determine, based on the first uplink data being the retransmission data or the initial transmission data and the correspondence, the transmission waveform corresponding to the retransmission data or the initial transmission data.

For example, a transform precoding parameter is used as the parameter indicating the transmission waveform. The correspondence between the retransmission data or the initial transmission data and the transmission waveform may be understood as a correspondence between the retransmission data or the initial transmission data and the transform precoding parameter. In this way, when the network device indicates whether the first uplink data is the retransmission data or the initial transmission data by using the first parameter, the terminal device may determine, based on the first uplink data being the retransmission data or the initial transmission data and the correspondence, the transform precoding parameter corresponding to the initial transmission data or the retransmission data, and determine the transmission waveform of the first uplink data based on the transform precoding parameter.

It should be noted that the correspondence between the retransmission data or the initial transmission data and the transmission waveform may be configured in a manner of pre-configuration, pre-definition, or the like. This is not limited in embodiments of this application.

The following uses a DFT-s-OFDM waveform and a CP-OFDM waveform as examples to describe the correspondence between the retransmission data or the initial transmission data number and the transmission waveform in an embodiment of this application. If an NDI indicates that the first uplink data is the initial transmission data (for example, a value of the NDI is 1), the first uplink data may correspond to the CP-OFDM waveform. On the contrary, if the NDI indicates that the first uplink data is the retransmission data (for example, the value of the NDI is 0), the first uplink data may correspond to the DFT-s-OFDM waveform.

Certainly, in an embodiment of this application, if the NDI indicates that the first uplink data is the initial transmission data (for example, the value of the NDI is 1), the first uplink data may correspond to the DFT-s-OFDM waveform. On the contrary, if the NDI indicates that the first uplink data is the retransmission data (for example, the value of the NDI is 0), the first uplink data may correspond to the CP-OFDM waveform. This is not limited in embodiments of this application.

In this embodiment of this application, the correspondence between the initial transmission data or the retransmission data and the transform precoding parameter may include: If the first uplink data is the initial transmission data, a transform precoding parameter corresponding to the initial transmission data is an enabled precoding transformer; and/or if the first uplink data is the retransmission data, a transform precoding parameter corresponding to the retransmission data is a disabled precoding transformer.

Certainly, in an embodiment of this application, the correspondence between the initial transmission data or the retransmission data and the transform precoding parameter may alternatively include: If the first uplink data is the initial transmission data, a transform precoding parameter corresponding to the initial transmission data is a disabled precoding transformer; and/or if the first uplink data is the retransmission data, a transform precoding parameter corresponding to the retransmission data is an enabled precoding transformer.

It should be noted that, the foregoing describes, with reference to Implementation 1 to Implementation 7, the manner of reusing different parameters in the first signalling to indicate the transmission waveform. The parameters that may be reused in embodiments of this application are not limited to the foregoing several parameters, and other parameters in the first signalling may also be reused, and a reusing manner for the same is similar to the reusing manner described above. For brevity, details are not described below.

In addition, the reusing manner described in Implementation 1 to Implementation 7 above may be used separately or in combination. This is not limited in embodiments of this application. If Implementation 1 to Implementation 7 above are used in combination, a priority corresponding to different implementations may be set to avoid a case that the transmission waveforms indicated through different implementations conflict.

In the embodiments of this application, that an original parameter in the first signalling is reused to indicate the transmission waveform of the first uplink data is beneficial to avoiding increasing overheads of transmitting the first signalling.

It should be noted that, in an embodiment of this application, a format of the DCI may alternatively be used to indicate the transmission waveform of the first uplink data. For example, different formats of the DCI may correspond to one or more transmission waveforms. In embodiments of this application, a manner of indicating the transmission waveform by using the DCI is not limited.

Certainly, in embodiments of this application, if increasing overheads of the first signalling is not considered, a parameter (for example, a precoding transform parameter) indicating the transmission waveform of the first uplink data may be newly added into an indication field of the first signalling. To be specific, the first signalling includes a first indication field, and the first indication field carries a parameter indicating the transmission waveform of the first uplink data.

The first indication field may include one or more of the following: a frequency domain resource allocation indication field, a time domain resource allocation indication field, a resource allocation type indication field, a modulation and coding scheme indication field, a new data indicator indication field, a HARQ process number indication field, or a TPC indication field used to schedule a PUSCH. Certainly, in embodiments of this application, the first indication field may alternatively be another indication field.

As described above, in a process of semi-statically configuring the transmission waveform, a parameter (also referred to as a "second parameter") for uniformly configuring a transmission waveform of uplink data of the terminal device may be carried in configuration information (for example, a PUSCH configuration or common configuration information for a random access channel (RACH-ConfigCommon)). In this case, if the method in embodiments of this application is applied again to indicate the transmission waveform of the first uplink data via the first signalling, the transmission waveform indicated by the first signalling may conflict with the transmission waveform indicated by the second parameter. Therefore, in the embodiments of this application, it may be specified that the second parameter becomes invalid in the case above. In other words, the terminal device may send the first uplink data by using the transmission waveform indicated by the first signalling.

An example in which the PUSCH configuration is combined with Implementation 1 is used for description. If the PUSCH configuration carries the second parameter, and the DCI indicates both a time domain resource allocation item and a transmission waveform of a PUSCH, the second parameter becomes invalid. In other words, the terminal device may send the PUSCH by using the transmission waveform indicated by the first signalling.

An example in which RACH-ConfigCommon is combined with Implementation 1 is used for description. If RACH-ConfigCommon carries the second parameter, and the RAR uplink grant indicates both a default time domain resource allocation item and a transmission waveform of a Msg3 PUSCH, the second parameter becomes invalid. In other words, the terminal device may send the Msg3 PUSCH by using the transmission waveform indicated by the first signalling.

Certainly, in embodiments of this application, if the first signalling indicates the transmission waveform of the first uplink data, in configuration information (for example, a PUSCH configuration or RACH-ConfigCommon) that is semi-statically configured, the second parameter may no longer be carried, to avoid a conflict with the transmission waveform indicated by the first signalling.

In embodiments of this application, the first uplink data being the initial transmission data or the retransmission data may alternatively be combined with the first signalling, to determine the transmission waveform of the first uplink data. In Implementation 1, if the first uplink data is the initial transmission data, the transmission waveform of the first uplink data may be determined based on the first signalling. In Implementation 2, if the first uplink data is the retransmission data, the transmission waveform of the first uplink data may be determined based on a transmission waveform of the initial transmission data of the first uplink data.

It should be noted that, that the transmission waveform of the first uplink data may be determined based on a transmission waveform of the initial transmission data of the first uplink data may include: The transmission waveform of the retransmission data is the same as the transmission waveform of the initial transmission data, or the transmission waveform of the retransmission data is different from the transmission waveform of the initial transmission data. This is not limited in embodiments of this application.

In addition, the two implementations above may be used separately or in combination. This is not limited in embodiments of this application. When the two implementations above are used in combination, it may be understood that whether the transmission waveform indicated by the first signalling takes effect may depend on whether the first uplink data is the initial transmission data or the retransmission data. For example, in Implementation 1, if the first uplink data is the initial transmission data, the transmission waveform of the first uplink data may be determined based on the first signalling. In other words, if the first uplink data is the initial transmission data (for example, a value of the NDI is 1), this indicates that the transmission waveform indicated by the first signalling takes effect. Correspondingly, in Implementation 2, if the first uplink data is the retransmission data, the transmission waveform of the retransmission data may be determined based on the transmission waveform of the initial transmission data. In other words, if the first uplink data is the retransmission data (for example, a value of the NDI is 0), this indicates that the transmission waveform indicated by the first signalling does not take effect.

Generally, after the initial transmission data fails to be transmitted, the retransmission data may start to be transmitted. A transmission failure of the initial transmission data may be related to the transmission waveform of the initial transmission data. Therefore, to improve reliability of data transmission, a waveform different from that of the initial transmission data may be used when the retransmission data is transmitted. Certainly, if complexity of a data combination process of the retransmission data and the initial transmission data needs to be simplified, the transmission waveform of the initial transmission data may be the same as the transmission waveform of the retransmission data.

It should be noted that the initial transmission data and the retransmission data mentioned above may belong to a same data transmission process scheduled by the DCI.

The foregoing describes in detail the method embodiments of this application with reference to FIG. 1 to FIG. 5. The following describes in detail apparatus embodiments of this application with reference to FIG. 6 to FIG. 8. It should be understood that the description of the method embodiments corresponds to the description of the apparatus embodiments, and therefore, for parts that are not described in detail, refer to the foregoing method embodiments.

FIG. 6 is a schematic diagram of a terminal device according to an embodiment of this application. The terminal device 600 shown in FIG. 6 includes a receiving unit 610.

The receiving unit 610 is configured to receive first signalling sent by a network device, where the first signalling is used to dynamically schedule first uplink data, and the first signalling is used to indicate a transmission waveform of the first uplink data.

In a possible implementation, the first signalling includes a first indication field, the first indication field is used to indicate a first parameter, and the first parameter corresponds to the transmission waveform of the first uplink data.

In a possible implementation, that the first parameter corresponds to the transmission waveform of the first uplink data includes the following: The first parameter corresponds to a parameter used to indicate the transmission waveform of the first uplink data.

In a possible implementation, the first parameter is used to determine a time domain resource of the first uplink data, and the time domain resource of the first uplink data corresponds to the transmission waveform of the first uplink data.

In a possible implementation, the first parameter indicates a time domain resource allocation item used to determine the time domain resource of the first uplink data, and the time domain resource allocation item includes a parameter used to indicate the transmission waveform of the first uplink data.

In a possible implementation, the terminal device is further configured with a second parameter, the second parameter is used to uniformly configure a transmission waveform of uplink data of the terminal device, and in a case that the terminal device is configured with the first parameter, the second parameter becomes invalid.

In a possible implementation, the second parameter is a parameter in a PUSCH configuration, or the second parameter is a parameter in common configuration information for a random access channel.

In a possible implementation, the first parameter is used to indicate a resource allocation type of the first uplink data, and the resource allocation type of the first uplink data corresponds to the transmission waveform of the first uplink data.

In a possible implementation, the resource allocation type of the first uplink data includes a type 0 and a type 1, where the type 0 and the type 1 correspond to a DFT-s-OFDM waveform and a CP-OFDM waveform, respectively, or the type 0 and the type 1 correspond to a CP-OFDM waveform and a DFT-s-OFDM waveform, respectively.

In a possible implementation, the first parameter includes one or more of the following: a parameter used to indicate a frequency domain resource occupied by the first uplink data; a parameter used to indicate a modulation and coding scheme of the first uplink data; a parameter used to indicate a transmit power of the first uplink data; a parameter used to indicate a HARQ process of the first uplink data; or a parameter used to indicate whether the first uplink data is retransmission data or initial transmission data.

In a possible implementation, the first indication field includes one or more of the following: a frequency domain resource allocation indication field, a time domain resource allocation indication field, a resource allocation type indication field, a modulation and coding scheme indication field, a new data indicator indication field, a HARQ process number indication field, or a TPC indication field used to schedule a PUSCH.

In a possible implementation, the parameter used to indicate the transmission waveform of the first uplink data includes a transform precoding parameter.

In a possible implementation, if the first uplink data is initial transmission data, the transmission waveform of the first uplink data is determined based on the first signalling; and/or if the first uplink data is retransmission data, the transmission waveform of the first uplink data is determined based on a transmission waveform of initial transmission data of the first uplink data.

In a possible implementation, initial transmission data and retransmission data of the first uplink data correspond to a same transmission waveform, or initial transmission data and retransmission data of the first uplink data correspond to different transmission waveforms.

In a possible implementation, the first signalling is used to indicate a transform precoding parameter, and different transmission waveforms for the first uplink data are determined based on the transform precoding parameter.

In a possible implementation, when the transform precoding parameter indicates an enabled transform precoder, a transmission beam of the first uplink data includes a DFT-s-OFDM waveform; and/or when the transform precoding parameter indicates a disabled transform precoder, a transmission beam of the first uplink data includes a CP-OFDM waveform.

In a possible implementation, the first signalling is DCI or a RAR uplink grant.

In a possible implementation, the first uplink data is a PUSCH.

FIG. 7 is a schematic diagram of a network device according to an embodiment of this application. The network device 700 shown in FIG. 7 includes a sending unit 710.

The sending unit 710 is configured to send first signalling to a terminal device, where the first signalling is used to dynamically schedule first uplink data, and the first signalling is used to indicate a transmission waveform of the first uplink data.

In a possible implementation, the first signalling includes a first indication field, the first indication field is used to indicate a first parameter, and the first parameter corresponds to the transmission waveform of the first uplink data.

In a possible implementation, that the first parameter corresponds to the transmission waveform of the first uplink data includes the following: The first parameter corresponds to a parameter used to indicate the transmission waveform of the first uplink data.

In a possible implementation, the first parameter is used to determine a time domain resource of the first uplink data, and the time domain resource of the first uplink data corresponds to the transmission waveform of the first uplink data.

In a possible implementation, the first parameter indicates a time domain resource allocation item used to determine the time domain resource of the first uplink data, and the time domain resource allocation item includes a parameter used to indicate the transmission waveform of the first uplink data.

In a possible implementation, the terminal device is further configured with a second parameter, the second parameter is used to uniformly configure a transmission waveform of uplink data of the terminal device, and in a case that the terminal device is configured with the first parameter, the second parameter becomes invalid.

In a possible implementation, the second parameter is a parameter in a PUSCH configuration, or the second parameter is a parameter in common configuration information for a random access channel.

In a possible implementation, the first parameter is used to indicate a resource allocation type of the first uplink data, and the resource allocation type of the first uplink data corresponds to the transmission waveform of the first uplink data.

In a possible implementation, the resource allocation type of the first uplink data includes a type 0 and a type 1, where the type 0 and the type 1 correspond to a DFT-s-OFDM waveform and a CP-OFDM waveform, respectively, or the type 0 and the type 1 correspond to a CP-OFDM waveform and a DFT-s-OFDM waveform, respectively.

In a possible implementation, the first parameter includes one or more of the following: a parameter used to indicate a frequency domain resource occupied by the first uplink data; a parameter used to indicate a modulation and coding scheme of the first uplink data; a parameter used to indicate a transmit power of the first uplink data; a parameter used to indicate a HARQ process of the first uplink data; or a parameter used to indicate whether the first uplink data is retransmission data or initial transmission data.

In a possible implementation, the first indication field includes one or more of the following: a frequency domain resource allocation indication field, a time domain resource allocation indication field, a resource allocation type indication field, a modulation and coding scheme indication field, a new data indicator indication field, a HARQ process number indication field, or a TPC indication field used to schedule a PUSCH.

In a possible implementation, the parameter used to indicate the transmission waveform of the first uplink data includes a transform precoding parameter.

In a possible implementation, if the first uplink data is initial transmission data, the transmission waveform of the first uplink data is determined based on the first signalling; and/or if the first uplink data is retransmission data, the transmission waveform of the first uplink data is determined based on a transmission waveform of initial transmission data of the first uplink data.

In a possible implementation, initial transmission data and retransmission data of the first uplink data correspond to a same transmission waveform, or initial transmission data and retransmission data of the first uplink data correspond to different transmission waveforms.

In a possible implementation, the first signalling is used to indicate a transform precoding parameter, and different transmission waveforms for the first uplink data are determined based on the transform precoding parameter.

In a possible implementation, when the transform precoding parameter indicates an enabled transform precoder, a transmission beam of the first uplink data includes a DFT-s-OFDM waveform; and/or when the transform precoding parameter indicates a disabled transform precoder, a transmission beam of the first uplink data includes a CP-OFDM waveform.

In a possible implementation, the first signalling is DCI or a RAR uplink grant.

In a possible implementation, the first uplink data is a PUSCH.

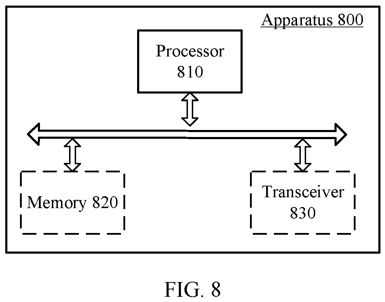

In an optional embodiment, the sending unit 610 may be a transceiver 840. The terminal device 600 may further include a processor 810 and a memory 820, as shown in FIG. 8.

In an optional embodiment, the receiving unit 710 may be the transceiver 840. The network device 700 may further include the processor 810 and the memory 820, as shown in FIG. 8.

FIG. 8 is a schematic diagram of a structure of a communications apparatus according to an embodiment of this application. Dashed lines in FIG. 8 indicate that the unit or module is optional. The apparatus 800 may be configured to implement the methods described in the foregoing method embodiments. The apparatus 800 may be a chip, a terminal device, or a network device.

The apparatus 800 may include one or more processors 810. The processor 810 may support the apparatus 800 in implementing the methods described in the foregoing method embodiments. The processor 810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

The apparatus 800 may further include one or more memories 820. The memory 820 stores a program. The program may be executed by the processor 810, so that the processor 810 performs the methods described in the foregoing method embodiments. The memory 820 may be separate from the processor 810 or may be integrated into the processor 810.

The apparatus 800 may further include a transceiver 830. The processor 810 may communicate with another device or chip through the transceiver 830. For example, the processor 810 may send data to and receive data from another device or chip through the transceiver 830.

An embodiment of this application further provides a computer-readable storage medium for storing a program. The computer-readable storage medium may be applied to the terminal or the network device provided in embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to perform the methods performed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "comprise" and "have" and any variations thereof are intended to cover a non-exclusive inclusion.

In embodiments of this application, the "indication" mentioned may be a direct indication or an indirect indication, or indicate an association. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that determining B based on A does not mean determining B based on only A, but instead B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, "pre-definition" or "pre-configuration" can be implemented by prestoring corresponding code or a corresponding table in a device (for example, including a terminal device and a network device) or in other manners that can be used for indicating related information. A specific implementation thereof is not limited in this application. For example, predefining may indicate being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first signalling sent by a network device, wherein the first signalling is used to dynamically schedule first uplink data, and the first signalling is used to indicate a transmission waveform of the first uplink data.

2. The method according to claim 1, wherein the first signalling comprises a first indication field, the first indication field is used to indicate a first parameter, and the first parameter corresponds to the transmission waveform of the first uplink data.

3. The method according to claim 2, wherein that the first parameter corresponds to the transmission waveform of the first uplink data comprises that the first parameter corresponds to a parameter used to indicate the transmission waveform of the first uplink data.

4. The method according to claim 2 or 3, wherein the first parameter is used to determine a time domain resource of the first uplink data, and the time domain resource of the first uplink data corresponds to the transmission waveform of the first uplink data.

5. The method according to claim 4, wherein the first parameter indicates a time domain resource allocation item used to determine the time domain resource of the first uplink data, and the time domain resource allocation item comprises a parameter used to indicate the transmission waveform of the first uplink data.

6. The method according to any one of claims 2 to 5, wherein the terminal device is further configured with a second parameter, the second parameter is used to uniformly configure a transmission waveform of uplink data of the terminal device, and in a case that the terminal device is configured with the first parameter, the second parameter becomes invalid.

7. The method according to claim 6, wherein the second parameter is a parameter in a PUSCH configuration, or the second parameter is a parameter in common configuration information for a random access channel.

8. The method according to claim 2 or 3, wherein the first parameter is used to indicate a resource allocation type of the first uplink data, and the resource allocation type of the first uplink data corresponds to the transmission waveform of the first uplink data.

9. The method according to claim 8, wherein the resource allocation type of the first uplink data comprises a type 0 and a type 1, wherein the type 0 and the type 1 correspond to a DFT-s-OFDM waveform and a CP-OFDM waveform, respectively, or the type 0 and the type 1 correspond to a CP-OFDM waveform and a DFT-s-OFDM waveform, respectively.

10. The method according to claim 2 or 3, wherein the first parameter comprises one or more of following:
a parameter used to indicate a frequency domain resource occupied by the first uplink data;
a parameter used to indicate a modulation and coding scheme of the first uplink data;
a parameter used to indicate a transmit power of the first uplink data;
a parameter used to indicate a HARQ process of the first uplink data; or
a parameter used to indicate whether the first uplink data is retransmission data or initial transmission data.

11. The method according to claim 2 or 3, wherein the first indication field comprises one or more of following:
a frequency domain resource allocation indication field, a time domain resource allocation indication field, a resource allocation type indication field, a modulation and coding scheme indication field, a new data indicator indication field, a HARQ process number indication field, or a TPC indication field used to schedule a PUSCH.

12. The method according to claim 3 or 5, wherein the parameter used to indicate the transmission waveform of the first uplink data comprises a transform precoding parameter.

13. The method according to any one of claims 1 to 12, wherein if the first uplink data is initial transmission data, the transmission waveform of the first uplink data is determined based on the first signalling; and/or
if the first uplink data is retransmission data, the transmission waveform of the first uplink data is determined based on a transmission waveform of initial transmission data of the first uplink data.

14. The method according to any one of claims 1 to 13, wherein initial transmission data and retransmission data of the first uplink data correspond to a same transmission waveform, or initial transmission data and retransmission data of the first uplink data correspond to different transmission waveforms.

15. The method according to claim 1, wherein the first signalling is used to indicate a transform precoding parameter, and different transmission waveforms for the first uplink data are determined based on the transform precoding parameter.

16. The method according to claim 15, wherein when the transform precoding parameter indicates an enabled transform precoder, a transmission beam of the first uplink data comprises a DFT-s-OFDM waveform; and/or
when the transform precoding parameter indicates a disabled transform precoder, a transmission beam of the first uplink data comprises a CP-OFDM waveform.

17. The method according to any one of claims 1 to 16, wherein the first signalling is DCI or a RAR uplink grant.

18. The method according to any one of claims 1 to 17, wherein the first uplink data is a PUSCH.

19. A communication method, comprising:
sending, by a network device, first signalling to a terminal device, wherein the first signalling is used to dynamically schedule first uplink data, and the first signalling is used to indicate a transmission waveform of the first uplink data.

20. The method according to claim 19, wherein the first signalling comprises a first indication field, the first indication field is used to indicate a first parameter, and the first parameter corresponds to the transmission waveform of the first uplink data.

21. The method according to claim 20, wherein that the first parameter corresponds to the transmission waveform of the first uplink data comprises that the first parameter corresponds to a parameter used to indicate the transmission waveform of the first uplink data.

22. The method according to claim 20 or 21, wherein the first parameter is used to determine a time domain resource of the first uplink data, and the time domain resource of the first uplink data corresponds to the transmission waveform of the first uplink data.

23. The method according to claim 22, wherein the first parameter indicates a time domain resource allocation item used to determine the time domain resource of the first uplink data, and the time domain resource allocation item comprises a parameter used to indicate the transmission waveform of the first uplink data.

24. The method according to any one of claims 20 to 23, wherein the terminal device is further configured with a second parameter, the second parameter is used to uniformly configure a transmission waveform of uplink data of the terminal device, and in a case that the terminal device is configured with the first parameter, the second parameter becomes invalid.

25. The method according to claim 24, wherein the second parameter is a parameter in a PUSCH configuration, or the second parameter is a parameter in common configuration information for a random access channel.

26. The method according to claim 20 or 21, wherein the first parameter is used to indicate a resource allocation type of the first uplink data, and the resource allocation type of the first uplink data corresponds to the transmission waveform of the first uplink data.

27. The method according to claim 26, wherein the resource allocation type of the first uplink data comprises a type 0 and a type 1, wherein the type 0 and the type 1 correspond to a DFT-s-OFDM waveform and a CP-OFDM waveform, respectively, or the type 0 and the type 1 correspond to a CP-OFDM waveform and a DFT-s-OFDM waveform, respectively.

28. The method according to claim 20 or 21, wherein the first parameter comprises one or more of following:
a parameter used to indicate a frequency domain resource occupied by the first uplink data;
a parameter used to indicate a modulation and coding scheme of the first uplink data;
a parameter used to indicate a transmit power of the first uplink data;
a parameter used to indicate a HARQ process of the first uplink data; or
a parameter used to indicate whether the first uplink data is retransmission data or initial transmission data.

29. The method according to claim 20 or 21, wherein the first indication field comprises one or more of following:
a frequency domain resource allocation indication field, a time domain resource allocation indication field, a resource allocation type indication field, a modulation and coding scheme indication field, a new data indicator indication field, a HARQ process number indication field, or a TPC indication field used to schedule a PUSCH.

30. The method according to claim 21 or 23, wherein the parameter used to indicate the transmission waveform of the first uplink data comprises a transform precoding parameter.

31. The method according to any one of claims 19 to 30, wherein if the first uplink data is initial transmission data, the transmission waveform of the first uplink data is determined based on the first signalling; and/or
if the first uplink data is retransmission data, the transmission waveform of the first uplink data is determined based on a transmission waveform of initial transmission data of the first uplink data.

32. The method according to any one of claims 19 to 31, wherein initial transmission data and retransmission data of the first uplink data correspond to a same transmission waveform, or initial transmission data and retransmission data of the first uplink data correspond to different transmission waveforms.

33. The method according to claim 19, wherein the first signalling is used to indicate a transform precoding parameter, and different transmission waveforms for the first uplink data are determined based on the transform precoding parameter.

34. The method according to claim 33, wherein when the transform precoding parameter indicates an enabled transform precoder, a transmission beam of the first uplink data comprises a DFT-s-OFDM waveform; and/or
when the transform precoding parameter indicates a disabled transform precoder, a transmission beam of the first uplink data comprises a CP-OFDM waveform.

35. The method according to any one of claims 19 to 34, wherein the first signalling is DCI or a RAR uplink grant.

36. The method according to any one of claims 19 to 35, wherein the first uplink data is a PUSCH.

37. A terminal device, comprising:
a receiving unit, configured to receive first signalling sent by a network device, wherein the first signalling is used to dynamically schedule first uplink data, and the first signalling is used to indicate a transmission waveform of the first uplink data.

38. The terminal device according to claim 37, wherein the first signalling comprises a first indication field, the first indication field is used to indicate a first parameter, and the first parameter corresponds to the transmission waveform of the first uplink data.

39. The terminal device according to claim 38, wherein that the first parameter corresponds to the transmission waveform of the first uplink data comprises that the first parameter corresponds to a parameter used to indicate the transmission waveform of the first uplink data.

40. The terminal device according to claim 38 or 39, wherein the first parameter is used to determine a time domain resource of the first uplink data, and the time domain resource of the first uplink data corresponds to the transmission waveform of the first uplink data.

41. The terminal device according to claim 40, wherein the first parameter indicates a time domain resource allocation item used to determine the time domain resource of the first uplink data, and the time domain resource allocation item comprises a parameter used to indicate the transmission waveform of the first uplink data.

42. The terminal device according to any one of claims 38 to 41, wherein the terminal device is further configured with a second parameter, the second parameter is used to uniformly configure a transmission waveform of uplink data of the terminal device, and in a case that the terminal device is configured with the first parameter, the second parameter becomes invalid.

43. The terminal device according to claim 42, wherein the second parameter is a parameter in a PUSCH configuration, or the second parameter is a parameter in common configuration information for a random access channel.

44. The terminal device according to claim 38 or 39, wherein the first parameter is used to indicate a resource allocation type of the first uplink data, and the resource allocation type of the first uplink data corresponds to the transmission waveform of the first uplink data.

45. The terminal device according to claim 44, wherein the resource allocation type of the first uplink data comprises a type 0 and a type 1, wherein the type 0 and the type 1 correspond to a DFT-s-OFDM waveform and a CP-OFDM waveform, respectively, or the type 0 and the type 1 correspond to a CP-OFDM waveform and a DFT-s-OFDM waveform, respectively.

46. The terminal device according to claim 38 or 39, wherein the first parameter comprises one or more of following:
a parameter used to indicate a frequency domain resource occupied by the first uplink data;
a parameter used to indicate a modulation and coding scheme of the first uplink data;
a parameter used to indicate a transmit power of the first uplink data;
a parameter used to indicate a HARQ process of the first uplink data; or
a parameter used to indicate whether the first uplink data is retransmission data or initial transmission data.

47. The terminal device according to claim 38 or 39, wherein the first indication field comprises one or more of following:
a frequency domain resource allocation indication field, a time domain resource allocation indication field, a resource allocation type indication field, a modulation and coding scheme indication field, a new data indicator indication field, a HARQ process number indication field, or a TPC indication field used to schedule a PUSCH.

48. The terminal device according to claim 39 or 41, wherein the parameter used to indicate the transmission waveform of the first uplink data comprises a transform precoding parameter.

49. The terminal device according to any one of claims 37 to 48, wherein if the first uplink data is initial transmission data, the transmission waveform of the first uplink data is determined based on the first signalling; and/or
if the first uplink data is retransmission data, the transmission waveform of the first uplink data is determined based on a transmission waveform of initial transmission data of the first uplink data.

50. The terminal device according to any one of claims 37 to 49, wherein initial transmission data and retransmission data of the first uplink data correspond to a same transmission waveform, or initial transmission data and retransmission data of the first uplink data correspond to different transmission waveforms.

51. The terminal device according to claim 37, wherein the first signalling is used to indicate a transform precoding parameter, and different transmission waveforms for the first uplink data are determined based on the transform precoding parameter.

52. The terminal device according to claim 51, wherein when the transform precoding parameter indicates an enabled transform precoder, a transmission beam of the first uplink data comprises a DFT-s-OFDM waveform; and/or
when the transform precoding parameter indicates a disabled transform precoder, a transmission beam of the first uplink data comprises a CP-OFDM waveform.

53. The terminal device according to any one of claims 37 to 52, wherein the first signalling is DCI or a RAR uplink grant.

54. The terminal device according to any one of claims 37 to 53, wherein the first uplink data is a PUSCH.

55. A network device, comprising:
a sending unit, configured to send first signalling to a terminal device, wherein the first signalling is used to dynamically schedule first uplink data, and the first signalling is used to indicate a transmission waveform of the first uplink data.

56. The network device according to claim 55, wherein the first signalling comprises a first indication field, the first indication field is used to indicate a first parameter, and the first parameter corresponds to the transmission waveform of the first uplink data.

57. The network device according to claim 56, wherein that the first parameter corresponds to the transmission waveform of the first uplink data comprises that the first parameter corresponds to a parameter used to indicate the transmission waveform of the first uplink data.

58. The network device according to claim 56 or 57, wherein the first parameter is used to determine a time domain resource of the first uplink data, and the time domain resource of the first uplink data corresponds to the transmission waveform of the first uplink data.

59. The network device according to claim 58, wherein the first parameter indicates a time domain resource allocation item used to determine the time domain resource of the first uplink data, and the time domain resource allocation item comprises a parameter used to indicate the transmission waveform of the first uplink data.

60. The network device according to any one of claims 56 to 59, wherein the terminal device is further configured with a second parameter, the second parameter is used to uniformly configure a transmission waveform of uplink data of the terminal device, and in a case that the terminal device is configured with the first parameter, the second parameter becomes invalid.

61. The network device according to claim 60, wherein the second parameter is a parameter in a PUSCH configuration, or the second parameter is a parameter in common configuration information for a random access channel.

62. The network device according to claim 56 or 57, wherein the first parameter is used to indicate a resource allocation type of the first uplink data, and the resource allocation type of the first uplink data corresponds to the transmission waveform of the first uplink data.

63. The network device according to claim 62, wherein the resource allocation type of the first uplink data comprises a type 0 and a type 1, wherein the type 0 and the type 1 correspond to a DFT-s-OFDM waveform and a CP-OFDM waveform, respectively, or the type 0 and the type 1 correspond to a CP-OFDM waveform and a DFT-s-OFDM waveform, respectively.

64. The network device according to claim 56 or 57, wherein the first parameter comprises one or more of following:
a parameter used to indicate a frequency domain resource occupied by the first uplink data;
a parameter used to indicate a modulation and coding scheme of the first uplink data;
a parameter used to indicate a transmit power of the first uplink data;
a parameter used to indicate a HARQ process of the first uplink data; or
a parameter used to indicate whether the first uplink data is retransmission data or initial transmission data.

65. The network device according to claim 56 or 57, wherein the first indication field comprises one or more of following:
a frequency domain resource allocation indication field, a time domain resource allocation indication field, a resource allocation type indication field, a modulation and coding scheme indication field, a new data indicator indication field, a HARQ process number indication field, or a TPC indication field used to schedule a PUSCH.

66. The network device according to claim 57 or 59, wherein the parameter used to indicate the transmission waveform of the first uplink data comprises a transform precoding parameter.

67. The network device according to any one of claims 55 to 66, wherein if the first uplink data is initial transmission data, the transmission waveform of the first uplink data is determined based on the first signalling; and/or
if the first uplink data is retransmission data, the transmission waveform of the first uplink data is determined based on a transmission waveform of initial transmission data of the first uplink data.

68. The network device according to any one of claims 55 to 67, wherein initial transmission data and retransmission data of the first uplink data correspond to a same transmission waveform, or initial transmission data and retransmission data of the first uplink data correspond to different transmission waveforms.

69. The network device according to claim 55, wherein the first signalling is used to indicate a transform precoding parameter, and different transmission waveforms for the first uplink data are determined based on the transform precoding parameter.

70. The network device according to claim 69, wherein when the transform precoding parameter indicates an enabled transform precoder, a transmission beam of the first uplink data comprises a DFT-s-OFDM waveform; and/or
when the transform precoding parameter indicates a disabled transform precoder, a transmission beam of the first uplink data comprises a CP-OFDM waveform.

71. The network device according to any one of claims 55 to 70, wherein the first signalling is DCI or a RAR uplink grant.

72. The network device according to any one of claims 55 to 71, wherein the first uplink data is a PUSCH.

73. A terminal device, comprising a transceiver, a memory, and a processor, wherein the memory is configured to store a program, and the processor is configured to invoke the program in the memory, and control the transceiver to send first uplink data, to cause the terminal to perform the method according to any one of claims 1 to 18.

74. A network device, comprising a memory and a processor, wherein the memory is configured to store a program, and the processor is configured to invoke the program in the memory, and control the transceiver to receive first uplink data, to cause the network device to perform the method according to any one of claims 19 to 36.

75. An apparatus, comprising a processor configured to invoke a program from a memory, to cause the apparatus to perform the method according to any one of claims 1 to 36.

76. A chip, comprising a processor configured to invoke a program from a memory, to cause a device installed with the chip to perform the method according to any one of claims 1 to 36.

77. A computer-readable storage medium, wherein the computer-readable storage medium stores a program, and the program causes a computer to perform the method according to any one of claims 1 to 36.

78. A computer program product, comprising a program, wherein the program causes a computer to perform the method according to any one of claims 1 to 36.

79. A computer program, wherein the computer program causes a computer to perform the method according to any one of claims 1 to 36.
